Europäisches Patentamt

European Patent Office

Office européen des brevets

(11) Veröffentlichungsnummer: **0 188 757**
**A1**

(12) # EUROPÄISCHE PATENTANMELDUNG

(21) Anmeldenummer: 85116110.9

(22) Anmeldetag: 17.12.85

(51) Int. Cl.⁴ **G01S 13/56** , G01S 7/28 ,
G01S 13/52

(30) Priorität: 20.12.84 DE 3446605

(43) Veröffentlichungstag der Anmeldung:
30.07.86 Patentblatt 86/31

(84) Benannte Vertragsstaaten:
AT BE DE FR GB IT NL SE

(71) Anmelder: **Siemens Aktiengesellschaft**
**Berlin und München Wittelsbacherplatz 2**
**D-8000 München 2(DE)**

(72) Erfinder: **Pieverling, Klaus von, Dr.-Ing.**
**Remiger Strasse 1**
**D-8190 Wolfratshausen(DE)**

(54) **Mikrowellen-Einbruchmeldesystem.**

(57) Das Mikrowellen-Einbruchmeldesystem weist ein Impulsradargerät mit einem Radarsensor und einer drehenden
Radarantenne (RA), eine Auswerteeinrichtung und eine der
Auswerteeinrichtung nachgeschaltete Anzeigeeinrichtung auf.
Die Radarantenne (RA) ist etwa in der Mitte in einer vorgegebenen Höhe eines zu schützenden Geländes (SZ) angeordnet, ein geschlossener Geländestreifen ist in seiner
Form diesem Gelände angepaßt und bildet eine
Überwachungszone (ÜZ) mit einer bestimmten Zonenbreite.
Die Überwachungszone (ÜZ) ist in eine Vielzahl von Kreisringsektoren eingeteilt, die jeweils eine Meßzelle (MZ) mit einer
vorgegebenen Winkeleinheit (WE) und einer bestimmten Sektorenbreite (SB) bilden. In der Auswerteeinrichtung wird von
den Radarempfangssignalen für jede Meßzelle ein Mittelwert
gebildet und gespeichert. Mit jedem Antennenumlauf wird der
Differenzbetrag aus dem jeweiligen Meßwert und dem Mittelwert gebildet. Dieser wird als Streuwert mit einem Schwellwert verglichen, wobei bei Überschreitung ein Alarmsignal für
die betreffende Meßzelle abgeleitet und abgespeichert wird.
Treten in mehreren benachbarten Meßzellen Alarmsignale
auf, so wird eine Alarmmeldung mit Angabe des Alarmortes -
(Winkel und Entfernung) abgegeben und angezeigt.

FIG 1

EP 0 188 757 A1

Mikrowellen-Einbruchmeldesystem

Die Erfindung bezieht sich auf ein Mikrowellen-Einbruchmeldesystem gemäß dem Oberbegriff des Anspruchs 1.

Besonders schutzbedürftige Objekte, z.B. militärische Anlagen oder Kernkraftwerke, werden zusätzlich gesichert, indem man die Umgebung derartiger Anlagen mit Schutzzäunen und mit elektronischen Überwachungseinrichtungen versieht. Zum Schutz eines größeren Areals mit elektronischen Mitteln werden verschiedene Systeme eingesetzt. Zum Beispiel werden kapazitive Schutzzäune errichtet, bei denen sich das elektrische Feld bei Annäherung eines Eindringlings ändert, so daß daraus ein Alarm abgeleitet werden kann, oder es werden Mikrowellenschranken verwendet, bei denen die Änderung des Übertragungsverhaltens einer Transmissionsstrecke beim Eindringen in den Transmissionsbereich verändert und daraus ein Alarm abgeleitet wird.

Sowohl der in seinem Aufbau sehr aufwendige kapazitive Schutzzaun als auch die Mikrowellenschranken weisen eine Reihe von Nachteilen auf. Der zu überwachende Systemabschnitt darf im allgemeinen eine maximale Länge von 100 Metern nicht überschreiten, da sonst der Eindringort nicht genau erkannt werden kann. Ferner weisen derartige Schutzeinrichtungen innerhalb des Systemabschnitts keine Entfernungsselektion auf. Auch das ungünstige Verhältnis zwischen den Signalen und den sich über die Strecke des Systemabschnitts akkumulierenden Störsignalen führt insbesondere durch Regen oder Schnee zu erheblichen Schwierigkeiten bei der Auswertung und geben daher oft Anlaß für Fehlmeldungen. Bei Schutzeinrichtungen mit Mikrowellenschranken sind zudem aufwendige Justiermaßnahmen erforderlich. Außerdem bringt die Aneinanderreihung mehrerer Schranken beim Schutz eines längeren Streckenabschnittes Interferenzprobleme mit sich.

Es ist auch bekannt, mit Hilfe von Radargeräten eingezäunte Areale zu überwachen. Beispielsweise ist in der DE-OS 16 16 424 ein System zum Überwachen eines vorgegebenen Überwachungsgebietes beschrieben, bei dem mehrere Überwachungsabschnitte gebildet sind, die jeweils zwei gegenüberliegend angeordnete, miteinander korrespondierende Radarsensoren aufweisen.

Es ist auch schon vorgeschlagen worden (ältere Anmeldung Nr. P 34 14 023.9, angem. 13.4.84), einen Streckenabschnitt mit einem Radargerät mit nur einer ortsfesten Radarantenne zu überwachen. Dabei werden die empfangenen Radarsignale in einer Auswerteeinrichtung mit einem Radarsignalprozessor und einem Mikrorechner verarbeitet und ein Eindringling erkannt und angezeigt.

Derartige Einbruchmeldesysteme mit Radargeräten haben jedoch den Nachteil, daß eine Vielzahl von Radargeräten, für jeden Streckenabschnitt eins, vorzusehen sind.

Aufgabe der Erfindung ist es, zur Überwachung des Vorfeldes von zu schützenden Objekten bzw. von einer Schutzzone ein Mikrowellen-Einbruchmeldesystem mit einem Radargerät so auszubilden, daß mit verhältnismäßig geringem Aufwand ein großes Gebiet, eine ausgedehnte Überwachungszone, überwacht werden kann.

Diese Aufgabe wird bei einem eingangs geschilderten System erfindungsgemäß mit den kennzeichnenden Merkmalen des Anspruchs 1 gelöst.

Das erfindungsgemäße Mikrowellen-Einbruchmeldesystem weist im Gegensatz zu dem bereits vorgeschlagenen System ein einziges Impulsradargerät mit einer sich drehenden Radarantenne auf. Die Radarantenne ist etwa in der Mitte eines zu überwachenden Geländes möglichst hoch, beispielsweise auf einem Radarturm oder einem Gebäude, angeordnet. Das zu überwachende Vorfeld ist ein geschlossener Geländestreifen, der die Überwachungszone mit einer Zonenbreite von mehreren, beispielsweise etwa 300 Metern Breite darstellt. Diese Überwachungszone ist in eine Vielzahl von Kreisring-Sektoren eingeteilt, die jeweils eine Meßzelle mit einer vorgebbaren Winkeleinheit, z.B. $\alpha = 1°$, und mit einer Sektorenbreite von beispielsweise 10 Metern bilden. Pro Winkeleinheit können beispielsweise 32 Meßzellen vorgesehen sein, die 32 Entfernungstore mit jeweils 10 Metern Breite bilden.

In der Auswerteeinrichtung, die dem Radarsensor nachgeordnet ist, wird in der einfachsten Ausführungsform der Erfindung aus den digitalisierten Radarempfangssignalen innerhalb einer Zielüberstreichung ein momentaner Meßwert für jede Meßzelle gebildet und mit einem einstellbaren Schwellenwert verglichen. Dazu weist die Auswerteeinrichtung unter anderem einen Mikrorechner auf. Überschreitet der Meßwert den Schwellenwert, so wird auf ein Alarmsignal erkannt. Dieses wird unter Angabe der Position der Meßzelle nach Winkel und Entfernung in einem Hauptspeicher eingeschrieben. Treten zeitlich nacheinander auch in benachbarten Meßzellen Alarmsignale auf, so wird hierdurch eine Alarmspur gebildet. Dies wird vom Mikrorechner erkannt. Erreicht die Alarmspur eine bestimmte Anzahl von Meßzellen, so liegt eine Alarmbedingung vor und der Mikrorechner gibt eine Alarmmeldung mit Angabe des Alarmortes nach Winkel und Entfernung an die Anzeigeeinrichtung.

Der Vorteil dieses Einbruchmeldesystems mit nur einer drehenden Antenne und nur einem Radarsensor liegt darin, daß ein wesentlich geringerer Aufwand notwendig ist, um ein einsehbares, beliebig geformtes Gebiet auf einen Eindringling hin zu überwachen. Wird ein Eindringling entdeckt, so wird dies mit der Positionsangabe (Winkel und Entfernung) angezeigt.

In einer zweckmäßigen Weiterbildung werden innhalb einer Zielüberstreichung für jede Meßzelle mehrere, z.B. 20, digitalisierte Radarempfangssignale zum momentanen Meßwert akkumuliert. Die Akkumulierung kann mit einem Tiefpaßfilter, der in seiner Charakteristik der Antennenkeule angepaßt ist, vorgenommen werden. Ebenso ist eine Aufintegration der Radarempfangssignale zu einem akkumulierten Meßwert möglich. Beides kann vom Mikrorechner durchgeführt werden.

In einer vorteilhaften Ausbildung des erfindungsgemäßen Mikrowellen-Einbruchmeldesystems wird zuerst, z.B. bei Inbetriebnahme des Impulsradargerätes, aus einer Mehrzahl von Zielüberstreichungen, z.B. 50 Antennenumläufen, von den Radarempfangssignalen für jede Meßzelle ein Mittelwert gebildet und mit der Positonsangabe der betreffenden Meßzelle nach Winkel und Entfernung im Hauptspeicher abgespeichert. Anschließend wird im Mikrorechner für jede Meßzelle der absolute Differenzbetrag aus dem jeweiligen momentanen, vorzugsweise akkumulierten Meßwert und dem betreffenden gespeicherten Mittelwert ermittelt. Dieser Absolutwert wird als Streuwert im Hauptspeicher gespeichert und mit dem Schwellenwert verglichen. Die weitere Prozedur erfolgt wie schon beschrieben.

Dies hat den Vorteil, daß die bei einem statischen Festziel, beispielsweise bei einem Haus, von Antennenumdrehung zu Antennenumdrehung gleichbleibende Amplitude der Empfangssignale genutzt werden. Eine unmittelbar neben dem Haus eindringende Person kann dabei noch sicher erkannt werden.

In einer vorteilhaften Weiterbildung der Erfindung wird für jede Meßzelle ein individuell einstellbarer Schwellenwert für die Auswertung herangezogen. Dieser Schwellenwert wird dadurch gewonnen, daß für jede Meßzelle jeweils der größte innerhalb einer vorgegebenen, alarmfreien Zeit auftretende Streuwert als Schwellenwert im Hauptspeicher abgespeichert wird. Die vorgegebene Zeit kann beispielsweise eine Stunde betragen. Die innerhalb dieser Zeit eintreffenden Meßsignale werden nur durch Störreflexionen, nicht durch einen Intruder erzeugt. Sowohl der individuelle Schwellenwert als auch der Mittelwert kann zu bestimmten Zeiten ermittelt und abgespeichert werden, z.B. bei Wetterveränderungen, Jahreszeitabhängigkeit oder am Morgen und am Abend.

Die Zonenbreite der Überwachungszone bzw. die Anzahl der Meßzellen pro Winkeleinheit (Entfernungstore) kann in der Auswerteeinrichtung eingegeben werden, so daß die obere und untere Grenze der Überwachungszone dem Gelände des zu überwachenden Vorfeldes angepaßt werden kann. Das heißt, eine Winkeleinheit weist eine bestimmte Anzahl von Entfernungstoren mit einer jeweiligen Entfernung entsprechend der Sektorenbreite auf, wobei die Anzahl von der Zonenbreite und der Sektorenbreite bestimmt wird. In einer zweckmäßigen Ausgestaltung der Erfindung kann die Winkeleinheit 0,5° betragen, so daß sich die Anzahl der Meßzellen gegenüber einer Winkeleinheit von 1° verdoppelt.

Die Auswerteeinrichtung, die dem Radarsensor mit Radarantenne nachgeschaltet ist und mit Radarsignalen beaufschlagt ist, weist zum kurzzeitigen Speichern der digitalisierten Radarsignale für eine jeweilige Winkeleinheit einen schnellen Zwischenspeicher und zum Speichern der Mittelwerte, der Streuwerte, der Schwellenwerte und der Alarmsignale für jede mit Ortsdaten (Positionsangabe) in Form von Winkel- und Entfernungsangabe adressierbare Meßzelle einen Hauptspeicher, zur Bildung der Ortsdaten einen vom Radarsensor mit den Radarsignalen wie Nordmarke und Antennenwinkel beaufschlagten Eingangspuffer einen Adressumschalter, der den Zwischenspeicher ansteuert, und einen Einlese-Adresszähler auf. Ferner weist die Auswerteeinrichtung zur Steuerung und Verarbeitung der Radarsignale einen Mikrorechner mit nachgeschalteter Anzeigeeinrichtung auf. Der Mikrorechner, ist über Daten-, Adress-und Steuerleitungen mit den Speichern und Schalteinrichtungen verbunden.

Weitere Einzelheiten und die Wirkungsweise des erfindungsgemäßen Mikrowellen-Einbruchmeldesystems werden an einem Ausführungsbeispiel anhand der Zeichnung beschrieben.

Dabei zeigen

Fig. 1 eine Anordnung des Radargerätes bzw. der Radarantenne in einem zu überwachenden Gelände und

Fig. 2 ein Blockschaltbild des Einbruchmeldesystems.

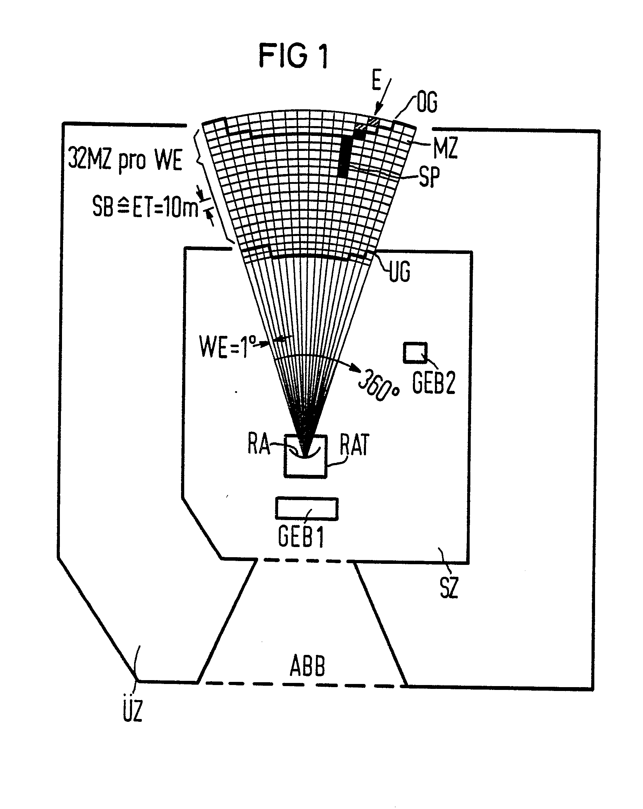

Fig. 1 zeigt eine Schutzzone SZ, die mit den Gebäuden GEB1 und 2 ein zu schützendes Objekt darstellt. Das Vorfeld dieser Schutzzone ist von der Überwachungszone ÜZ gebildet, die beispielsweise eine Zonenbreite von etwa 300 Metern aufweist. Etwa in der Mitte der Schutzzone SZ ist auf einem Radarturm RAT die Radarantenne RA drehend angeordnet. Das Gebäude GEB2 ist niedriger als der Radarturm, das Gebäude GEB1 hingegen höher, so daß sich in der Überwachungszone ÜZ ein abgeschatteter Bereich ABB ergibt, der eigens mit bekannten Mitteln überwacht werden muß.

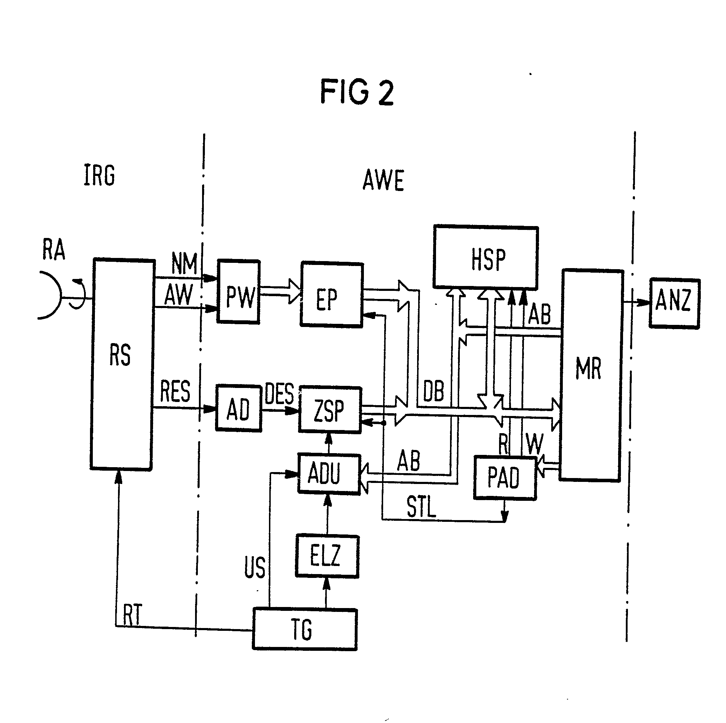

Zweckmäßigerweise wird man in einem solchen ähnlichen Fall, wenn das Gebäude nicht zu nahe an der Überwachungszone liegt, die Radarantenne auf dem höchsten Gebäude anordnen. Die Überwachungszone ÜZ ist in eine Vielzahl von Meßzellen MZ eingeteilt. In der Figur 1 ist ein Ausschnitt dieser gebildeten Meßzellen MZ dargestellt. Dabei ist die Überwachungszone ÜZ an seiner oberen und unteren Grenze OG und UG der Form des zu überwachenden Geländes angepaßt. Hier ist eine Winkeleinheit WE von 1° angenommen. Pro Winkeleinheit WE sind 32 Meßzellen MZ vorgesehen, die jeweils ein Entfernungstor ET mit 10 Metern bilden. Mit dieser Anordnung ist eine Bewegungserkennung eines Eindringlings E durch die Auswertung der Dopplersignale nicht möglich, weil bei einer Umdrehungszeit der Antenne von beispielsweise 2 Sekunden die Zielbeleuchtungszeit (ca. 10 msec.) zu gering ist. Bei dem erfindungsgemäßen Einbruchmeldesystem werden die Radarempfangssignale RES für jede Meßzelle MZ empfangen und ausgewertet. Dies geschieht in der Auswerteeinrichtung AWE, wie sie im Blockschaltbild in Fig.2 gezeigt ist.

In Fig. 2 ist die Auswerteeinrichtung AWE vereinfacht in einem Blockschaltbild mit dem vorgeschalteten Radarsensor RS mit Radarantenne RA und der nachgeordneten Anzeigeeinrichtung ANZ dargestellt. Die vom Radarsensor RS kommenden Radarempfangssignale RES werden im Analog-Digital-Wandler AD digitalisiert und als digitalisierte Empfangssignale DES dem schnellen Zwischenspeicher ZSP zugeführt. Die weiteren Radarsignale, wie Nordmarke NM und Antennenwinkel AW, werden über einen Pegelwandler PW einem Eingangspuffer EP zugeführt. Die Adressen des Zwischenspeichers ZSP werden über den Adressumschalter ADU durch von einem Taktgeber TG erzeugte Steuerungssignale US einerseits auf den Einlese--Adresszähler ELZ geschaltet, andererseits auf den Adreßbus AB des Mikrorechners MR für den Auslesevorgang. Der Taktgeber TG liefert auch den Radartakt RT an den Radarsensor RS. Die Auswerteeinrichtung AWE weist ferner den Mikrorechner MR auf, der die anfallenden Daten verarbeitet, steuert und weiterleitet, und einen Hauptspeicher HSP, in dem eine Vielzahl von bearbeiteten und aufbereiteten Daten abspeicherbar ist. Ein Port-Adressen Decoder PAD, der dem Mikrorechner MR zugeordnet ist, gibt die Schreib-Lese-Befehle R u. W an den Hauptspeicher HSP und über eine Steuerleitung STL Steuerbefehle an den Zwischenspeicher ZSP und an den Eingangspuffer EP. Über einen Adressenbus AB ist der Mikrorechner MR mit dem Hauptspeicher HSP und der Adressumschaltung ADU verbunden, über einen Datenbus DB ist der Mikrorechner MR mit dem Hauptspeicher HSP, dem Zwischenspeicher ZSP und dem Eingangspuffer EP verbunden. Die digitalisierten Empfangssignale DES werden für jede Winkeleinheit WE dem Zwischenspeicher ZSP zugeführt. Von dort gelangen sie direkt zum Mikrorechner MR, wo die einlaufenden Daten verarbeitet werden. In dem Hauptspeicher HSP werden für jede Meßzelle MZ die ermittelten Daten, wie Mittelwerte, Streuwerte, Schwellenwerte, Alarmsignale und Ortsdaten (Positionsangaben), nämlich Antennenwinkel AW und Entfernungstore ET, gespeichert. Die Empfangssignale DES pro Meßzelle MZ werden aus dem Zwischenspeicher ZSP dem Mikrorechner MR zugeführt. Dabei werden jeweils ca. 18 Empfangssignale DES pro Meßzelle MZ akkumuliert. Diese Akkumulation erfaßt sämtliche im Zuge der Zielüberstreichung (ca 10 ms ) empfangenen Signalechos RES bzw. DES eines gegebenen Geländepunktes (Empfangsperioden pro Zielüberstreichungszeit). Der akkumulierte Wert wird dann für jede Meßzelle MZ im Hauptspeicher HSP abgespeichert. Pro Winkeleinheit WE, in diesem Ausführungsbeispiel 1°, werden 32 Entfernungstore ET mit jeweils 10 Metern ausgewertet, so daß sich eine Zonenbreite ZB von 320 Metern ergibt.

Für jede Meßzelle wird nun aus den akkumulierten Meßwerten ein über viele Antennenumdrehungen (z.B. 50) laufender kontinuierlich erneuerter Mittelwert gebildet. Aus diesen sich nur langsam ändernden, gespeicherten Mittelwerten und den aktuellen akkumulierten Werten wird durch Differenzbildung für jede Meßzelle ein Streuwert berechnet und abgespeichert. Jeder Meßzelle ist eine Adresse zugeordnet, die durch die jeweilige Entfernungstornummer und Winkeltornummer bestimmt ist. Für den ordnungsgemäßen Betriebsablauf müssen diesen Adresswerten in eindeutiger Weise Entfernungsmeßwerte (ET) bzw. Winkelstellungen der Radarantenne zugeordnet sein.

Die Zuordnung der Entfernungsmeßwerte erfolgt beim Einlesen der Radardaten (DES) in den Zwischenspeicher ZSP durch den Einlese-Adresszähler ELZ, der synchron mit dem Aussenden des Radarsendeimpulses auf den Wert Null gestellt wird und die Adresswerte mit einem konstanten Takt von z.B. 15 MHz (entsprechend 10 m Radarlaufzeit) weiterschaltet. Der Mikrorechner MR liest den Zwischenspeicher ZSP in der Radartotzeit, wobei er durch geeignete Wahl des Lese-Adressbereiches den für den jeweiligen Winkel notwendigen Entfernungsausschnitt (ET) auswählt. Zur Winkelzuordnung werden zwei Steuersignale aus der Radarantenne verwendet, die Zählimpulse AW, z.B. ein Zählimpuls pro Grad Winkeländerung, und ein Markierungsimpuls NM für die Nordrichtung. Diese Signale steuern den Winkeladresszähler im Mikrorechner (NM setzt auf 0, AW schaltet um eine Einheit weiter). Die ermittelten Streuwerte für jede Meßzelle werden mit einem allen Meßzellen gemeinsamen Schwellenwert oder mit einem für jede Meßzelle individuell einstellbaren Schwellenwert verglichen. Überschreitet der Streuwert den vorgegebenen Schwellenwert, so wird auf ein Alarmsignal erkannt. Tritt dieses Alarmsignal für die betreffende Meßzelle wiederholt, also für mehrere Antennenumläufe, auf, so wird dieses Alarmsignal für diese Zelle im Hauptspeicher HSP erneut als Spurkern zum Anlegen einer Alarmspur abgespeichert. Tritt das Alarmsignal für eine Meßzelle nach weiteren Antennenumläufen nicht mehr auf, so wird es nach einer gewissen Zeit verworfen. Treten nun Alarmsignale in benachbarten Meßzellen auf, so wird eine Alarmspur gebildet. Erkennt der Mikrorechner bei einer Mindestzahl von Nachbar-Meßzellen Alarmsignale, die aufgrund ihres räumlichen und zeitlichen Erscheinens auf eine Intrussionsspur schließen lassen, so gibt er an die dem Mikrorechner MR nachgeschalteten Anzeigeeinrichtung ANZ eine Alarmmeldung unter Angabe des Alarmorts mit Winkel und Entfernung.

Auf diese Weise ist es möglich, einen Eindringling E erkennen und genau lokalisieren zu können. Dabei kann bei entsprechender Ausgestaltung einer Einbruchmeldeanlage mit diesen Daten eine Videokamera auf dieses Ziel ausgerichtet und die Optik der Videokamera entsprechend eingestellt werden. Ebenso können andere Hilfseinrichtungen, wie beispielsweise Scheinwerfer, eingeschaltet werden. Bei dem erfindungsgemäßen Mikrowellen-Einbruchmeldesystem werden in der Auswerteeinrichtung mit dem Mikrorechner bei Auftreten von sogenannten Alarmsignalen für eine jeweilige Meßzelle Zielspuren aufgebaut und verfolgt, wobei bei Überschreitung einer Spur über mehrere Meßzellen hinweg die Alarmmeldung erfolgt. Dabei kann der Aufbau und die Verfolgung der Zielspur am Anzeigegerät aufgezeigt werden.

Liste der Bezugszeichen

AB Adressbus

ABB abgeschalteter Bereich

AD Analog/Digital-Wandler

ADU Adressumschaltung

ANZ Anzeigeeinrichtung

AW Antennenwinkel

AWE Auswerteeinrichtung

DB Datenbus

DES digitalisierte Radarempfangssignale (RES)

E Eindringling

ELZ Einlese-Adresszähler

ET Empfangstor

EP Eingangspuffer

GEB Gebäude

HSP Hauptspeicher

IRG Impulsradargerät (RA + RS)

MR Mikrorechner

NM Nordmarke

OG obere Grenze

PAD Port-Adressen-Decoder

PW Pegelwandler

RA Radarantenne (drehend)

RAT Radarturm

RES Radarempfangssignale

RS Radarsensor (Radar-Sender/- Empfänger)

RT Radartakt

SB Sektorenbreite

SP Spur (eines Eindringlings E)

STL Steuerleitung

SZ Schutzzone

TG Taktgeber

UG untere Grenze

US Umschaltesignal

ÜZ Überwachungszone

ZB Zonenbreite

WE Winkeleinheit

ZSP Zwischenspeicher

**Ansprüche**

1. Mikrowellen-Einbruchmeldesystem zur Überwachung des Vorfeldes von zu schützenden Objekten mit einem Impulsradargerät (IRG), das einem Radarsensor (RS) und eine Radarantenne (RA) aufweist, mit einer Auswerteeinrichtung (AWE), die einen Analog/Digital-Wandler (AD), einen Mikrorechner (MR) und mehrere Datenspeicher (HSP, ZSP, EP) aufweist, mit einer Anzeigeeinrichtung (ANZ), die der Auswerteeinrichtung (AWE) nachgeschaltet ist, wobei der Radarsensor (RS) pulsweise Radarsignale aussendet und die reflektierten Sendesignale als Radarempfangssignale - (RES) dem Analog/Digitalwandler (AD) der Auswerteeinrichtung (AWE) zuführt,

**gekennzeichnet** durch folgende Merkmale: die Radarantenne (RA) ist drehend etwa in der Mitte in einer vorgebbaren Höhe eines zu schützenden Geländes (SZ) angeordnet:

ein geschlossener Geländestreifen ist in seiner Form dem jeweils zu überwachenden Gelände anpaßbar und bildet eine Überwachungszone (ÜZ) mit einer Zonenbreite (ZB) von mehreren 100 Metern, wobei die obere und untere Grenze (OG und UG) in der Auswerteeinrichtung (AWE) beliebig festlegbar ist;

die Überwachungszone (ÜZ) ist in eine Vielzahl (n) von Kreisring-Sektoren eingeteilt, die jeweils eine Meßzelle - (MZ) mit einer vorgebbaren Winkeleinheit (WE) von = 1° und einer Sektorenbreite (SB) von ca. 5 bis 20 Metern bilden;

in der Auswerteeinrichtung (AWE) wird innerhalb einer Zielüberstreichung aus den digitalisierten Radarempfangssignalen (DES) für jede Meßzelle (MZ) ein momentaner Meßwert (MW) ermittelt und mit einem einstellbaren Schwellenwert im Mikrorechner (MR) verglichen;

überschreitet der momentane Meßwert den Schwellenwert, so wird eine Alarmspur angelegt, indem für die betreffende Meßzelle (MZ) mit Angabe der entsprechenden Position nach Winkel und Entfernung ein Alarmsignal in einem Hauptspeicher (HSP) gespeichert wird, das mit jedem Antennenumlauf erneut eingeschrieben wird, wobei eine Alarmspur gebildet wird, wenn zeitlich nacheinander auch für benachbarte Meßzellen (MZ) Alarmsignale im Hauptspeicher (HSP) gespeichert werden;

sind für eine bestimmte Anzahl von Meßzellen (MZ) Alarmsignale gespeichert (HSP), so erkennt der Mikrorechner - (MR) eine Alarmbedingung und gibt mit Angabe des Alarmortes (Winkel und Entfernung) eine Alarmmeldung an die Anzeigeeinrichtung (ANZ).

2. Mikrowellen-Einbruchmeldesystem nach Anspruch 1, dadurch gekennzeichnet, daß in der Auswerteeinrichtung - (AWE) innerhalb einer Zielüberstreichung für jede Meßzelle (MZ) mehrere digitalisierte Radarempfangssignale (DES) zu einem momentanen Meßwert akkumuliert werden.

3. Mikrowellen-Einbruchmeldesystem nach Anspruch 1 oder 2, dadurch gekennzeichnet, daß bei Inbetriebnahme des Impulsradargerätes (IRG) in der Auswerteeinrichtung - (AWE) für jede Meßzelle (MZ) aus einer bestimmten Anzahl von Zielüberstreichungen (Radarumläufe) von den digitalisierten Radarempfangssignalen (DES) ein Mittelwert gebildet und für jede Meßzelle (MZ) mit Positionsangabe im Hauptspeicher (HSP) gespeichert wird, daß anschließend für jede Meßzelle (MZ) im Mikrorechner (MR) der Absolutwert der Differenz aus dem gespeicherten Mittelwert und dem momentanen akkumulierten Meßwert ermittelt und als Streuwert im Hauptspeicher (HSP) gespeichert wird, und daß im Mikrorechner (MR) der Streuwert mit dem Schwellenwert verglichen wird.

4. Mikrowellen-Einbruchmeldesystem nach einem der Ansprüche 1 bis 3, dadurch gekennzeichnet, daß für jede Meßzelle ein individuell einstellbarer Schwellenwert vorgesehen ist.

5. Mikrowellen-Einbruchmeldesystem nach Anspruch 4, dadurch gekennzeichnet, daß für jede Meßzelle der individuelle Streuwert selbsttätig gebildet wird, indem jeweils der größte innerhalb einer vorgegebenen Zeit auftretende Streuwert als Schwellenwert festgelegt und im Hauptspeicher eingeschrieben wird.

6. Mikrowellen-Einbruchmeldesystem nach einem der vorherigen Ansprüche, dadurch gekennzeichnet, daß der Mittelwert und der individuelle Schwellenwert in bestimmten Zeitabständen gebildet wird.

7. Mikrowellen-Einbruchmeldesystem nach Anspruch 1, dadurch gekennzeichnet, daß eine Winkeleinheit (WE) eine bestimmte Anzahl (i) von Entfernungstoren (ET) mit einer jeweiligen Entfernung entsprechend der Sektorenbreite - (SP) aufweist, wobei die Anzahl (i) von der Zonenbreite - (ZB) und der Sektorenbreite (SB) bestimmt wird.

8. Mikrowellen-Einbruchmeldesystem nach Anspruch 7, dadurch gekennzeichnet, daß die Winkeleinheit (WE) O,5°, die Zonenbreite (ZB) etwa 300 Meter und die Sektorenbreite (SB) 10 Meter beträgt.

9. Mikrowellen-Einbruchmeldesystem nach einem der vorhergehenden Ansprüche, dadurch gekennzeichnet, daß die Auswerteeinrichtung (AWE) zum kurzzeitigen Speichern der digitalisierten Radarempfangssignale (DES) für eine jeweilige Winkeleinheit (WE) innerhalb einer Zielüberstreichung einen schnellen Zwischenspeicher (ZSP), zum Speichern der Mittelwerte, der Streuwerte, der individuellen Schwellenwerte und der Alarmsignale für jede mit Positionsdaten - (Winkel und Entfernung) versehenen Meßzelle (MZ) den Hauptspeicher (HSP), zur Bildung der Positionsdaten einen vom Radarsensor (RS) mit Nordmarke (NM) und Antennenwinkel (AW) beaufschlagten Eingangspuffer (EP) und einen über einen Adressumschalter (ADU) den Zwischenspeicher (ZSP) zugeordneten Einlese-Adresszähler (ELZ) und zur Steuerung der Verarbeitung der Radarsignale den Mikrorechner (MR) aufweist, der über Daten-, Adress- und Steuerleitungen (DB, AB, STL) mit den vorgenannten Einrichtungen und der Anzeigeeinrichtung (ANZ) verbunden ist.

## FIG 1

32MZ pro WE

$SB \hat{=} ET = 10m$

E

OG

MZ

SP

UG

$WE = 1°$

360°

GEB2

RA — RAT

GEB1

SZ

ABB

ÜZ

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | US-A-4 197 537 (HONEYWELL)<br><br>* Abbildungen 1-7; Spalte 2, Zeile 51 - Spalte 9, Zeile 21 *<br><br>--- | 1-4,6-9 | G 01 S 13/56<br>G 01 S 7/28<br>G 01 S 13/52 |
| Y | US-A-4 233 604 (G. LEPERE)<br><br>* Abbildungen 1-5; Spalte 2, Zeile 50 - Spalte 5, Zeile 22; Spalte 6, Zeilen 31-45 *<br><br>--- | 1-4,6-9 | |
| Y | FR-A-2 241 077 (SOCIETE INDUSTRIELLE DES NOUVELLES TECHNIQUES RADIOELECTRIQUES ET DE L'ELECTRONIQUE FRANCAISE)<br>* Abbildungen 1-4; Seite 3, Zeilen 6-40; Seite 4, Zeile 15 - Seite 8, Zeile 36 *<br><br>--- | 3,8,9 | |
| A | EP-A-0 107 588 (THOMSON-CSF)<br><br>* Abbildungen 1,3; Seite 1, Zeile 3 - Seite 2, Zeile 33; Seite 3, Zeile 19 - Seite 4, Zeile 33; Seite 7, Zeilen 27-33 *<br><br>----- | 1,3,4,7,9 | RECHERCHIERTE SACHGEBIETE (Int Cl.4)<br><br>G 01 S |

Der vorliegende Recherchenbericht wurde für alle Patentansprüche erstellt

| Recherchenort | Abschlußdatum der Recherche | Prüfer |
|---|---|---|
| DEN HAAG | 24-03-1986 | CANNARD J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82